# EUROPEAN PATENT APPLICATION

(11) **EP 3 043 184 A1**
(43) Date of publication of application: **13.07.2016**
(21) Application number: 14840380.1
(22) Date of filing: 29.07.2014
(51) Int. Cl.: G01N 35/00

(54) **AUTOMATED ANALYZER**

(30) Priority: 02.09.2013 JP 2013181613
(71) Applicant: Hitachi High-Technologies Corporation, Tokyo 105-8717 (JP)
(72) Inventor: OONUMA Mitsuru, Tokyo 100-8280 (JP); SATO Yoko, Tokyo 100-8280 (JP); YAMAMOTO Takashi, Tokyo 100-8280 (JP); SETOMARU Takeshi, Tokyo 105-8717 (JP); CHIBA Hideyasu, Tokyo 105-8717 (JP)
(74) Representative: MERH-IP Matias Erny Reichl Hoffmann Patentanwälte PartG mbB
(86) International application number: PCT/JP2014/069918
(87) International publication number: WO 2015/029674

(57) **Abstract**

A panel holding base holding an operating panel disposed on a front-face side of a device upper part of an automated analyzer is inclined so as to rise from a lower end side on the front-face side toward an upper end side, and has a shape with increasingly narrower width from the lower end side toward the upper end side. As a result, increased operating panel operability and improved access to a sample disc or a reagent disc are simultaneously achieved.

## Description

### Technical Field

The present invention relates to an automated analyzer for analyzing a biological sample, such as blood or urine.

### Background Art

A clinical examinations for medical diagnosis may involve biochemical analysis or immunological analysis of protein, sugars, lipids, enzymes, hormones, inorganic ions, disease markers and the like in a biological sample, such as blood or urine. During the clinical examination, because a plurality of examination items needs to be processed reliably and at high speed, a large part of the examination is executed by an automated analyzer.

The reactions measured by the automated analyzer mainly include two types, one a color reaction of substrate and enzymes, and the other an immunoreaction of antigen and antibody. The analysis using the former reaction is referred to as biochemical analysis, where examination items include LDH, ALP, AST and the like. A biochemical analysis is performed by, for example, measuring the absorbance of a reaction liquid to be analyzed, which is obtained by mixing and causing a reaction of a desired reagent in a sample, such as serum. An analysis using the latter reaction is referred to as immunoassay, where examination items include CRP, IgG, RF and the like. In the substances to be measured by the latter, there are examination items for which quantification in a low concentration region having low blood concentration is required. For such items, latex immunoassay where latex particles with the surface sensitized (bonded) with an antibody are used as a sensitizer is used.

In Patent Literature 1, there is described an automated analyzer with an operating panel and a liquid crystal display disposed on the front-face side of a device upper portion.

### Citation List

### Patent Literature

Patent Literature 1: JP 4-359154 A

### Summary of Invention

### Technical Problem

The operating panel of the automated analyzer is preferably disposed on the front-face side of the device upper part for efficient input operation. Meanwhile, on the upper part of the automated analyzer, a sample disc and a reagent disc are disposed. Accordingly, if the operating panel is disposed on the front-face side of the device upper part, either the sample disc or the reagent disc has to be disposed behind the operating panel due to space restrictions. When the operator performs the work of, e.g., charging samples on the sample disc or charging reagent bottles on the reagent disc on the device upper part, the operating panel in front poses an obstacle and reduces workability.

The present invention provides an automated analyzer with improved operator workability at the device upper part.

### Solution to Problem

According to the present invention, the shape of a panel holding base holding an operating panel disposed on a front-face side of a device upper part of an automated analyzer is optimized, whereby increased operating panel operability and improved access to a sample disc or a reagent disc are simultaneous achieved.

Specifically, an automated analyzer according to the present invention includes: a housing having an upper surface on which there are disposed a sample disc holding a plurality of samples, a reagent disc holding a plurality of kinds of reagents, a reaction disc holding a plurality of reaction cells, a sample dispensing mechanism for dispensing the samples into the reaction cells held on the reaction disc, a reagent dispensing mechanism for dispensing the reagents into the reaction cells held on the reaction disc, and an operating panel; and a protective cover covering the upper surface of the housing in an openable/closable manner. The operating panel is held on a panel holding base formed on a front-face side of the upper surface of the housing, and the panel holding base is inclined so as to rise from a lower end side on the front-face side toward an upper end side, and has a shape with increasingly narrower width from the lower end side toward the upper end side.

The protective cover includes a recessed portion in an end portion on the front-face side of the protective cover, the recessed portion being withdrawn so as not to interfere with the operating panel held on the panel holding base when the protective cover is closed to cover the upper surface of the housing.

The recessed portion of the protective cover is disposed so that the operating panel is positioned in a space within the recessed portion when the protective cover is closed to cover the upper surface of the housing.

The panel holding base is formed with increasingly lower height radially from the upper end side toward the lower end side.

The operating panel is held on a substantially trapezoidal surface of the panel holding base.

The protective cover includes a transparent region formed in a part thereof from a transparent material, and the recessed portion is formed from an opaque material.

### Advantageous Effects of Invention

According to the present invention, operating panel operability can be increased and access to a sample disc or a reagent disc can be improved.

Other problems, features, and effects will become apparent from the following description of embodiments.

### Brief Description of Drawings

FIG. 1 is a schematic diagram illustrating the arrangement of elements on a housing upper surface of an automated analyzer.
FIG. 2 is a diagram illustrating an overall configuration example of the automated analyzer.
FIG. 3 is a schematic diagram of a transmitted light measurement unit.
FIG. 4 is an overall schematic diagram of an embodiment of the automated analyzer according to the present invention.
FIG. 5 is a diagram illustrating the shape of a panel holding base of the automated analyzer.
FIG. 6 is a diagram illustrating the shape of a panel holding base for comparison.
FIG. 7 is a diagram for describing the shape of a protective cover.
FIG. 8 is a schematic view of a cross section taken along A-A of FIG. 7.
FIG. 9 is a schematic view illustrating a modification of the panel holding base.
FIG. 10 is a diagram for describing the operating panel.
FIG. 11 is a schematic view for describing the panel holding base and the operating panel according to another embodiment.

### Description of Embodiments

In the following, modes for carrying out the present invention will be described with reference to the drawings.

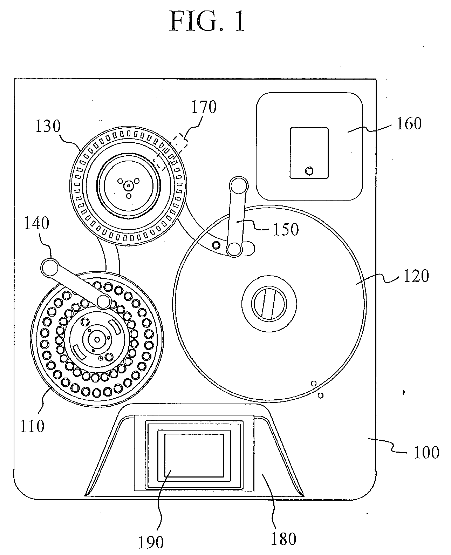

FIG. 1 is a schematic diagram illustrating the arrangement of elements on a housing upper surface 100 of an example of an automated analyzer according to the present invention.

The automated analyzer according to the present embodiment includes a housing upper surface 100 on which a sample disc 110, a reagent disc 120, a reaction disc 130, a sample dispensing mechanism 140, and a reagent dispensing mechanism 150 are disposed. On the front-face side (front side) of the housing upper surface 100, a panel holding base 180 is disposed, holding an operating panel 190 thereon. The details of the panel holding base 180 will be described later. According to the present embodiment, on the housing upper surface 100, the reaction disc 130 is disposed in the rear-left, with the reagent disc 120 and the reagent dispensing mechanism 150 disposed to the front-right of the reaction disc 130. To the front-left of the reaction disc 130, the sample disc 110 and the sample dispensing mechanism 140 are disposed. The reagent disc 120 is equipped with a refrigeration function for preserving reagents and has a reagent disc lid covering the top of the disc. To the rear of the reagent disc 120, a compressor 160 for the refrigeration function is disposed. While the example uses a single reagent disc, it goes without saying that a plurality of reagent discs may be disposed, and the number of the reagent dispensing mechanisms may be increased in accordance with the number or location of the reagent discs.

The automated analyzer is provided with, e.g., a stirring unit for stirring a mixture solution in the reaction cell; a reaction cell washing unit for washing the reaction cell; and a nozzle washing unit for washing a dispensing mechanism nozzle. Inside the housing, there are provided various devices, not shown, constituting the automated analyzer, a power supply for driving such devices, a control mechanism, a constant-temperature bath, a wash pump and the like. Description of these units will be omitted as they do not constitute important features of the present invention and are also provided in conventional automated analyzers.

The automated analyzer according to the present embodiment is provided with a diffraction grating as a wavelength dispersing element, and performs absorbance measurement of a sample at a predetermined wavelength. In the housing, a transmitted light measurement unit 170 for spectroscopic analysis of transmitted light transmitted by the reaction liquid is disposed at a prescribed region on the circumference of the reaction disc 130.

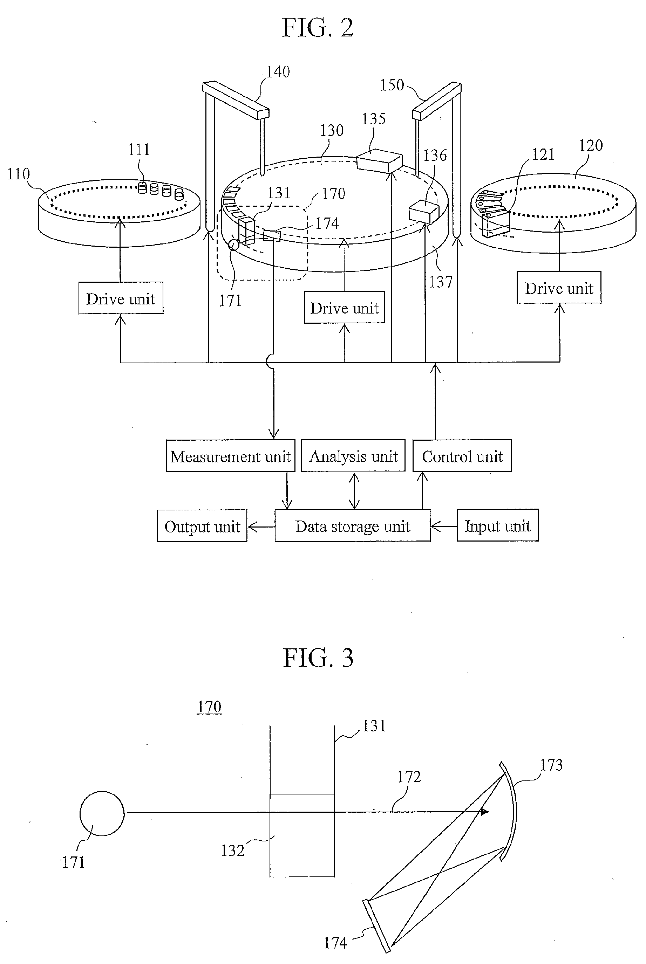

FIG. 2 is a schematic diagram illustrating an overall configuration example including a control system for the automated analyzer illustrated in FIG. 1.

On the sample disc 110, a plurality of sample cups 111 containing samples is disposed. On the reagent disc 120, a plurality of reagent bottles 121 containing reagents is disposed. On the circumference of the reaction disc 130, a plurality of reaction cells 131 for creating reaction liquids by internally mixing the samples and the reagents is disposed. The sample dispensing mechanism 140 is provided with an arm rotating about a support column and a nozzle secured to the arm, and dispenses certain quantities of the samples from the sample cups 111 to the reaction cells 131. The reagent dispensing mechanism 150 is provided with an arm rotating about a support column and a nozzle secured to the arm, and dispenses certain quantities of the reagents from the reagent bottles 121 to the reaction cells 131. The stirring unit 135 stirs and mixes the samples and the reagents in the reaction cells 131. The reaction cell washing unit 136 causes the reaction liquids to be discharged from the reaction cells 131 after analysis and washes the reaction cells. Into the washed reaction cells 131, the next sample is re-dispensed from the sample dispensing mechanism 140, while a new reagent is dispensed from the reagent dispensing mechanism 150 and used for a separate reaction. The reaction cells 131 are immersed in a constant-temperature fluid 137 in the constant-temperature bath of which the temperature and flow rate are controlled, so that the reaction cells 131 and the reaction liquids therein can be moved in a temperature-maintained state. The constant-temperature fluid 137 comprises water, for example, and the constant-temperature fluid temperature is adjusted by a control unit to be 37±0.1°C. The transmitted light measurement unit 170 is disposed on a part of the circumference of the reaction disc 130.

FIG. 3 is a schematic diagram of the transmitted light measurement unit. The transmitted light measurement unit 170 is disposed in the housing and irradiates the reaction cells 131 with light from a halogen lamp light source 171; disperses, with the diffraction grating 173, light 172 transmitted by a reaction liquid 132 of a sample mixed with reagent; and receives the light with a photodiode array 174 comprising photodiodes arranged in an array. The wavelengths of the received light are, for example, 340 nm, 405 nm, 450 nm, 480 nm, 505 nm, 546 nm, 570 nm, 600 nm, 660 nm, 700 nm, 750 nm, and 800 nm. Data of the respective wavelengths of light received by the photodiode array 174 are sent via the measurement unit to a data storage unit in a PC.

The analysis of the amount of a certain component in the sample is conducted according to the following procedure. First, a certain quantity of a sample in the sample cups 111 is dispensed into the reaction cells 131 by the sample dispensing mechanism 140. Then, a certain quantity of the reagent in the reagent bottles 121 is dispensed into the reaction cells 131 by the reagent dispensing mechanism 150. During the dispensing, the sample disc 110, the reagent disc 120, and the reaction disc 130 are rotationally driven by the respective drive units under the control of the control unit, whereby the sample cups 111, the reagent bottles 121, and the reaction cells 131 are moved in accordance with the timing of the dispensing mechanism. Thereafter, the sample and reagent in the reaction cells 131 are stirred by the stirring unit 135, producing the reaction liquid 132. The light transmitted by the reaction liquid 132 is measured each time the light passes through the transmitted light measurement unit 170 during rotation of the reaction disc 130, and the measurement unit outputs reaction process data which are successively accumulated in the data storage unit. After a certain time, such as approximately 10 minutes, of the light measuring, the inside of the reaction cells 131 is washed by the reaction cell washing unit 136, and then the analysis of the next examination item is performed. In the meantime, another reagent is additionally dispensed by the reagent dispensing mechanism 150 into the reaction cells 131 as needed, stirred by the stirring unit 135, and then measured for a certain time. In this way, the reaction process data of the reaction liquid having certain time intervals are stored in the data storage unit. From the accumulated reaction process data, the amount of the component is analyzed in the analysis unit on the basis of calibration curve data for each examination item. Data necessary for controlling the various units and analysis are input from an input unit to the data storage unit. The calibration curve data is retained in the data storage unit. Various data, results, and alarms are output by an output unit via a display and the like.

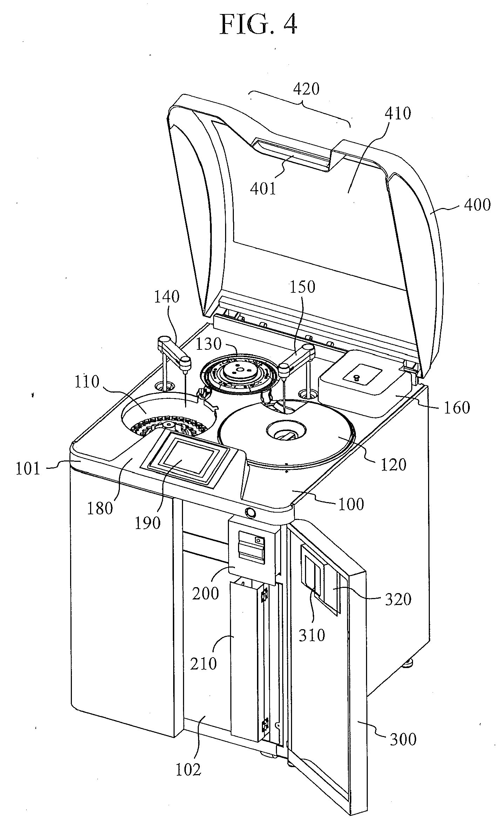

FIG. 4 is an overall schematic diagram illustrating an embodiment of the automated analyzer according to the present invention. The housing upper surface 100 has a front end 101 projecting from a housing front-face wall 102 like eaves. In other words, the housing front-face wall 102 is recessed from the front end 101 of the housing upper surface 100. The housing front-face wall 102 is provided with a small-size printer 200, such as one of thermal transfer type, and a sheet receiver unit 210 for receiving printed roll paper discharged from the printer. The printer and the sheet receiver unit are disposed at locations recessed from the front end 101 of the housing upper surface. The printer 200 and the sheet receiver unit 210 are concealed when openable front-face doors 300 are closed. The front-face doors 300 have a window portion 320 formed at a location corresponding to the printer 200 and recessed from the door surface, the window portion 320 including an opening 310. The structure enables the roll paper printed by the printer 200 to be discharged and stored in the sheet receiver unit 210 positioned inside the closed front-face doors 300, or discharged outside the device via the opening 310 of the window portion 320 of the front-face doors 300. When the front-face doors 300 are opened or closed, even if a sample or reagent is erroneously spilled on the housing upper surface 100 and drips from the front end 101 of the housing upper surface 100, the printer 200 can be protected from being contaminated.

The automated analyzer according to the present embodiment is also provided with a protective cover 400 that can cover the housing upper surface 100 except for the left and right flat portions of the panel holding base 180 and the region in which the operating panel 190 is disposed. The protective cover 400 is attached to a rear end portion of the housing upper part by hinges in an openable/closable manner. Accordingly, the operator can open or close the protective cover 400 by holding a handle portion 401 of a front-end recessed portion 420 of the protective cover 400. While the body of the protective cover 400 is made of an opaque material, the protective cover has a transparent region 410 at around the center of the upper part thereof that is formed of transparent material. Accordingly, the operator can visually observe, through the transparent region 410 when the protective cover 400 is closed, the movement of the mechanism units of the automated analyzer, such as the sample dispensing mechanism 140 or the reagent dispensing mechanism 150, during operation. The protective cover 400 is preferably closed for protection of the various elements disposed on the housing upper surface and for dust proofing purpose, except when a sample or reagent is set for analysis preparation, or during cleaning of the housing upper surface 100 or maintenance including component state confirmation or replacement.

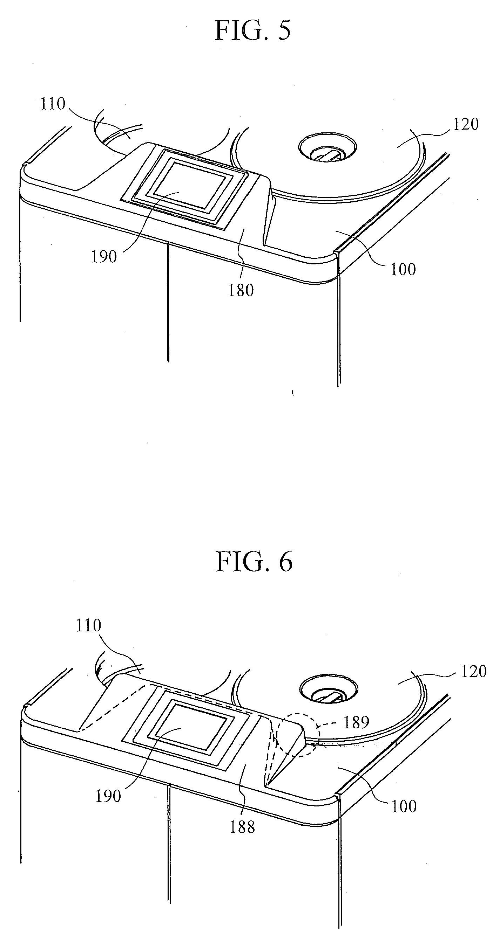

With reference to FIG. 5 and FIG. 6, the shape of the panel holding base disposed on the front-face side of the housing upper surface will be described. FIG. 5 is a diagram illustrating the shape of the panel holding base of the automated analyzer according to the present embodiment. FIG. 6 is a diagram illustrating the shape of a panel holding base for comparison.

As illustrated in FIG. 5, the panel holding base 180 is disposed at the center on the front-face side (front side) of the housing upper surface so as to facilitate operation of the operating panel 190. The panel holding base is inclined so as to rise from the lower end side on the front-face side toward the upper end side, and has a shape with the lateral width becoming increasingly narrower from the lower end side to the upper end side. In other words, the panel holding base has decreasing height radially from the upper end side to the lower end side, and includes a substantially trapezoidal operating panel holding surface. The operating panel 190 is held on the panel holding base 180. According to the present embodiment, as the operating panel 190, a touch panel-type liquid crystal display is installed and utilized for inputting information using a menu screen or for displaying information. The size of the panel holding surface of the panel holding base 180 in the upper-lower direction is approximately the same as or slightly larger than the top-bottom size of the operating panel 190. However, the size of the panel holding surface of the panel holding base 180 in the left-right direction is greater than the left-right size of the operating panel 190, forming flat surfaces extending both to the left and right of the operating panel 190.

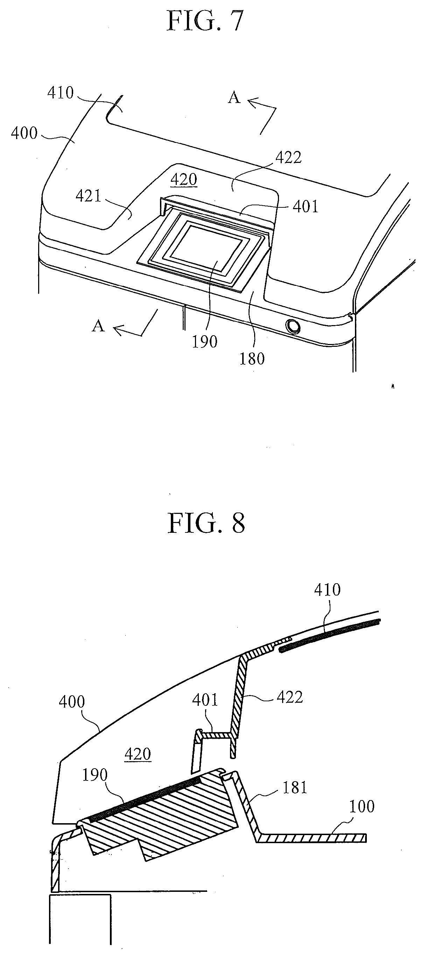

The shape of the panel holding base 180 provides the following effects. Namely, the trapezoidal and inclined structure with spaces on both sides of the operating panel 190 provides improved access to the reagent disc and the sample disc while achieving an increase in operability of the operating panel 190. In connection also with the input operation by the operator with the protective cover closed, as will be described later with reference to FIG. 7, compared to the panel holding base 180 having the same size and shape as the operating panel 190, the input operation can be easily performed when the size of the panel holding surface of the panel holding base 180 is made greater in the left-right direction than the size of the operating panel 190, thus providing greater margins in the left-right direction where the operator can place his or her hands when making finger-input on the touch panel, or greater margins for the range of hand movements. Although the panel holding base 180 is greater in size than the operating panel 190 laterally, when the operator stands in front of the device front face and accesses the sample disc 110 or the reagent disc 120 disposed to the rear of the operating panel 190, the operator is given improved visibility of the sample disc 110 and the reagent disc 120 thanks to the trapezoidal and inclined structure with the wider front side and narrower rear, whereby the setting of the sample or reagent is facilitated.

FIG. 6 is a diagram for describing the shape of a panel holding base as a comparative example. When the work efficiency of the operator performing an information input operation via finger-input using the touch panel-type operating panel 190 is considered, it is effective to ensure locations for placing the operator's hands or a greater range of their movement by making the size of the panel holding surface of the panel holding base 180 in the left-right direction greater than that of the operating panel 190. Accordingly, in the example of a panel holding base 188 illustrated in FIG. 6, the operating panel holding surface of the panel holding base 180 is provided with the rectangular shape so as to ensure wide planar areas to the left and right of the operating panel.

In the case of the panel holding base 188 having wide planar areas to the left and right of the operating panel 190, the input operation by the operator is facilitated and improved operability can be obtained. However, the rectangular shape of the panel holding base lowers accessibility to the sample disc or the reagent disc. Namely, in the case of the rectangular panel holding base 188 illustrated in FIG. 6, corner portions 189 at the rear of the panel holding base 188 may collide with the reagent held in hand and about to be set, or with the operator's arm, making the setting of the reagent difficult. In addition, the corner portions make it difficult to see the location on the sample disc 110 or the reagent disc 120 at which a target object is to be set. Particularly, the corner portions make it difficult to see locations toward the front.

Thus, when excess planar areas are provided to the left and right of the panel holding base in order to improve operating panel operability, the accessibility to the housing upper surface at the time of reagent refilling and the like is degraded. Accordingly, the operating panel operability and the accessibility to the sample disc or the reagent disc have a trade-off relationship. The operating panel operability and the accessibility over the housing upper surface are both satisfied by the embodiment illustrated in FIG. 5, in which the shape of the panel holding base is made trapezoidal by cutting off the corner portions 189 of the rectangular panel holding base 188 illustrated in FIG. 6.

With reference to FIG. 7, the shape of the protective cover will be described. The protective cover 400 is opened when setting a reagent or sample, or for state confirmation of the various units disposed on the device upper surface or during maintenance, such as cleaning. Otherwise, the protective cover is normally closed so as to protect the housing upper surface. The information input via the operating panel 190 includes information about, e.g., an examination condition setting, an examination item setting, and expendables replacement information. Commands for examination start, examination pause, printer output and the like are also input by operating the operating panel 190. Namely, these input operations using the operating panel 190 are performed on the assumption that the protective cover 400 is closed. Accordingly, it is necessary to determine not only the shape of the panel holding base 180 but also the shape of the protective cover 400 from the viewpoint of increasing the operating panel 190 operability.

Thus, the protective cover 400 has a recessed portion 420 where the end portion at the center of the front-face side is withdrawn so as not to interfere with the operating panel 190 held on the panel holding base 180 when the protective cover is closed to cover the upper surface 100 of the housing. As illustrated in FIG. 7, the recessed portion 420 is disposed so that the operating panel 190 is positioned in the space within the recessed portion 420 when the protective cover 400 is closed to cover the upper surface 100 of the housing. Specifically, the space formed by the recessed portion 420 has a trapezoidal shape which is approximately identical to the shape of the panel holding base 180. In other words, the shape has a wider front side and a narrowed rear.

More specifically, left and right side walls 421 and a rear wall 422 forming the recessed portion 420 of the protective cover 400 are not vertical walls with respect to the housing upper surface 100 but rather slightly inclined to fall outside as they rise upward. As a result, the space formed by the recessed portion 420 of the protective cover 400 when closed provides a mortar-like space with increasing width toward the top, which increases accessibility to the operating panel 190 while suppressing an oppressive look to the operator. The left and right side walls forming the recessed portion 420 are positioned on the left and right edge portions of the panel holding base 180 when the protective cover 400 is closed. The rear wall 422 forming the recessed portion 420 of the protective cover 400 is provided with a handle portion 401 that can be held by hand when opening the protective cover 400.

Because the protective cover 400 is provided with the trapezoidal recessed portion 420, even when the protective cover 400 is closed and thereby the housing upper surface 100 is protected, not only the operating panel 190 can be exposed and operated, but also a space for enabling the placement of hands or the movement of hands can be ensured on both sides of the operating panel 190, so that the operating panel operability is not adversely affected. Further, while the protective cover 400 is formed of opaque material around the recessed portion 420, the transparent region 410 formed of transparent material is disposed at the location corresponding to the region in which the mechanism units, such as the sample dispensing mechanism 140 and the reagent dispensing mechanism 150, are disposed. The opaque material of the protective cover 400 presents a simple exterior by hiding the complex structures behind the protective cover, and increases operability. In addition, during operation of the automated analyzer, the movements of the mechanism units can be visually confirmed through the transparent region 410 of the protective cover 400 when closed and covering the upper surface 100 of the housing.

FIG. 8 is a schematic view of a cross section taken along A-A of FIG. 7. At the lower end of the rear wall 422 forming the recessed portion 420 of the protective cover 400, the handle portion 401 is disposed protruding forward so as to be graspable by hand. The handle portion 401 has an eaves-like shape, covering an upper end portion of the panel holding base 180. Between the lower end of the handle portion 401 of the closed protective cover 400 and the panel holding base 180, a gap is formed. The operator can easily open the protective cover 400 by inserting his or her hand with the palm side up into the gap and raising the cover. Even when it is necessary to analyze an urgent sample by interrupting the operation of the automated analyzer, the operator can open the protective cover 400 by holding the handle portion 401 and set the sample at a predetermined location on the sample disc. As illustrated in FIG. 8, a wall surface 181 at the rear of the panel holding base 180 is not vertical with respect to the housing upper surface 100 but inclined toward the back of the housing. The inclined wall surface 181 and the housing upper surface 100 form an obtuse angle, which makes cleaning easy.

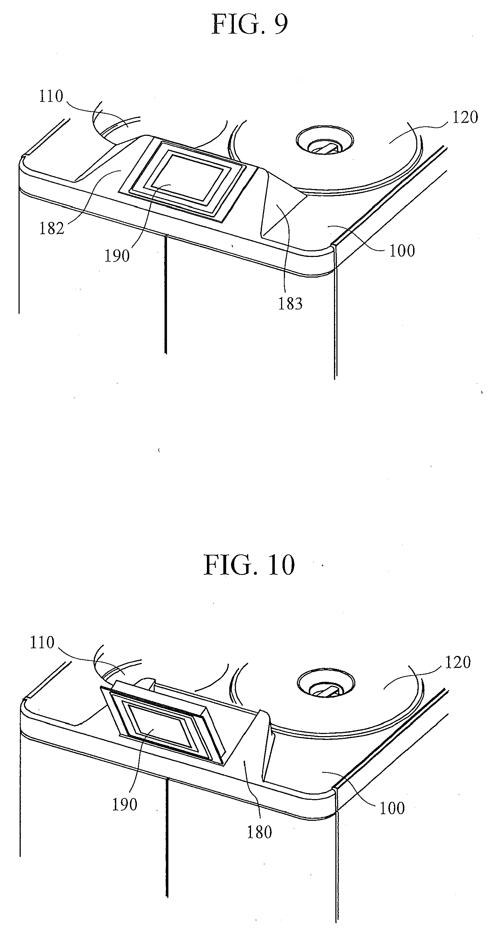

FIG. 9 is a schematic view illustrating a modification of the panel holding base in the automated analyzer according to the present invention. The embodiment slightly differs from the embodiment illustrated in FIG. 5 only in the shape of the panel holding base.

In the panel holding base 182 according to the present embodiment, the panel holding surface holding the operating panel 190 is inclined to rise from the lower end side, i.e., the front-face side (front side), toward the upper end side, as in the embodiment illustrated in FIG. 5, with the width becoming narrower from the lower end side toward the upper end side, resulting in a substantially trapezoidal shape. As in the embodiment illustrated in FIG. 5, there are planar areas extending to the left and right of the operating panel 190. The present embodiment differs in the shape of the side faces 183 of the panel holding base 182. In the embodiment illustrated in FIG. 5, the side faces of the panel holding base 180 are substantially vertical with respect to the housing upper surface 100 in consideration of accessibility to the housing upper surface 100. On the other hand, in the modification illustrated in FIG. 9, the side faces are inclined to the extent that accessibility to the housing upper surface 100 is not adversely affected. Because the side faces 183 of the panel holding base 182 are inclined, they form an obtuse angle with the housing upper surface 100, providing the effect of making the cleaning of the housing upper surface 100 easy.

FIG. 10 is a diagram for describing the operating panel. The operating panel 190 may be affixed to the panel holding base 180, or configured to be tiltable by having its lower end attached to the panel holding base 180 via a hinge, as illustrated in FIG. 10. Being tiltable enables the selection of the angle of the operating panel during use, so that, e.g., the state of the automated analyzer can be confirmed at a distance. Obviously, the angle may be adjusted to the height of the operator or the height of the operator's line of sight for ease of viewing.

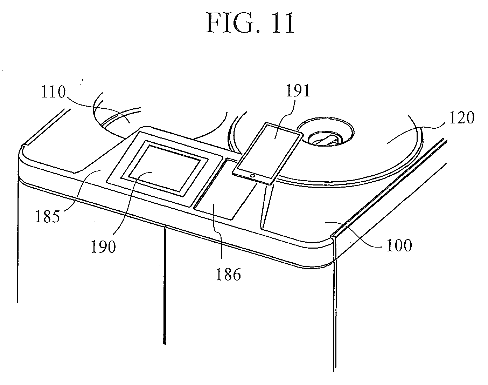

FIG. 11 is a schematic view for describing the panel holding base and the operating panel according to another embodiment.

The automated analyzer according to the present embodiment is provided with a holder portion 186 for holding another detachable input/output device 191 on the panel holding base 185, in addition to the normal touch panel-type liquid crystal display 190. As the detachable input/output device 191, electronic paper or a tablet terminal may be used, for example.

The electronic paper has low electric power consumption and consumes either no or very little power during display, and its electric power consumption during information rewrite is also very small. In addition, the electronic paper produces a display by utilizing reflected light as does paper, providing the features including a wide field of view angle, ease of view even when facing direct sunlight, and the small burden on the eye. When electronic paper is used as the detachable input/output device 191, the paper can be utilized as an external output device in place of a printer, although an input operation cannot be performed. When electronic paper is used instead of the printer for the output of information such as an analysis result, the need for printing sheets will be eliminated, thus contributing to the protection of environment. It will also become possible to select necessary information from the information displayed in the display screen of the operating panel 190, output the information onto electronic paper, and carry the paper to a different location, for example.

When a tablet terminal is used as the detachable input/output device 191, it becomes possible to input examination conditions and the like into the tablet terminal at a location away from the automated analyzer, and then, when executing an analysis, set the tablet terminal on the holder portion 186 of the panel holding base of the automated analyzer 185 so as to communicate with the device body, thus exchanging information with the automated analyzer. In this case, the operator does not need to stand in front of the automated analyzer to input information, so that the operator can perform the input operation leisurely. In addition, as in the case of the electronic paper, it will become possible to, e.g., receive information such as an analysis result via communications instead of through a printer; select and receive necessary information from the information displayed in the display screen of the operating panel 190; and carry the information to a separate location where the information can be utilized.

The holder portion 186 is preferably disposed on the right side of the operating panel 190. When disposed on the right side of the operating panel 190, improved operability can be provided for the majority of users, who are right-handed. Particularly, when the detachable input/output device 191 is a tablet terminal, improved ease of use of the device can be provided by determining the location in favor of operability.

The holder portion 186 is preferably disposed on the side farther from the sample disc 110 and nearer the operating panel 190. The side closer to the sample disc 110 has higher frequency of operator access and is therefore more likely to present an obstacle to work, and has a higher risk of sample spillage and the like. Accordingly, by placing the holder portion 186 on the side farther from the sample disc 110 and nearer the operating panel 190 as illustrated, the risk of contamination of the tablet terminal or electrical failure due to liquid can be decreased. Particularly, when the detachable input/output device 191 is a tablet terminal, should the tablet terminal be dropped on the sample cups on the sample disc 110 when attaching or detaching the tablet terminal to or from the holder portion 186, for example, the sample cups could be damaged and the sample may be lost. Such serious risk can be decreased by placing the holder portion 186 on the side farther from the sample disc 110.

Preferably, the holder portion 186 is disposed in front of the reagent disc 120. The reagent disc does not have a high frequency of access by the operator and therefore does not present an obstacle to work. The reagent disc is also away from the sample disc and not subject to the risk of sample spillage. In addition, the reagent disc 120 has its upper part covered by the lid and is not bare, so that no serious accident would be caused even if the tablet terminal were to be dropped on the reagent disc 120. Even when the lid of the reagent disc 120 is detached for a reagent replacement work, a mere fall of the tablet terminal would not cause breakage of the reagent bottles or spillage of the reagent, in contrast to the case of the sample cup.

When the device configuration is such that the locations of the sample disc 110 and the reagent disc 120 are reversed, the holder portion 186 is preferably disposed on the left side of the operating panel 190. This arrangement is the same as the earlier example in the sense that the holder portion 186 is positioned away from the sample disc 110 or in front of the reagent disc 120, and thus the same effect can be obtained. While the advantage of improved operability for the right-handed users may be lost, avoidance of serious accident can be given priority over operability.

The holder portion 186 is disposed at the recessed portion 420 of the protective cover 400. This arrangement provides the detachable input/output device 191 held in the holder portion 186 with the same effect as when the operating panel 190 is disposed in the recessed portion 420 of the protective cover 400.

The present invention is not limited to the foregoing embodiments and may include various modifications. The above-described embodiments have been described in detail for illustrative purposes only, and are not necessarily limited to include all of the described features. Part of the configuration of one embodiment may be replaced with the configuration of another embodiment, or the configuration of the other embodiment may be incorporated into the configuration of the one embodiment. With respect to a part of the configuration of each embodiment, addition of another configuration, deletion, or substitution may be made.

### Reference Signs List

- 100: Housing upper surface
- 101: Front end of housing upper surface
- 110: Sample disc
- 111: Sample cup
- 120: Reagent disc
- 121: Reagent bottle
- 130: Reaction disc
- 131: Reaction cell
- 140: Sample dispensing mechanism
- 150: Reagent dispensing mechanism
- 160: Compressor
- 170: Transmitted light measurement unit
- 180, 182, 185: Panel holding base
- 186: Holder portion
- 190: Operating panel
- 191: Detachable input/output device
- 200: Printer
- 210: Sheet receiver unit
- 300: Front-face door
- 400: Protective cover
- 401: Handle portion
- 420: Recessed portion

## Claims

1. An automated analyzer comprising:
a housing having an upper surface on which there are disposed a sample disc holding a plurality of samples, a reagent disc holding a plurality of kinds of reagents, a reaction disc holding a plurality of reaction cells, a sample dispensing mechanism for dispensing the samples into the reaction cells held on the reaction disc, a reagent dispensing mechanism for dispensing the reagents into the reaction cells held on the reaction disc, and an operating panel; and
a protective cover covering the upper surface of the housing in an openable/closable manner,
wherein the operating panel is held on a panel holding base formed on a front-face side of the upper surface of the housing, and
the panel holding base is inclined so as to rise from a lower end side on the front-face side toward an upper end side, and has a shape with increasingly narrower width from the lower end side toward the upper end side.

2. The automated analyzer according to claim 1, wherein the protective cover includes a recessed portion in an end portion on the front-face side of the protective cover, the recessed portion being withdrawn so as not to interfere with the operating panel held on the panel holding base when the protective cover is closed to cover the upper surface of the housing.

3. The automated analyzer according to claim 2, wherein the recessed portion of the protective cover is disposed so that the operating panel is positioned in a space within the recessed portion when the protective cover is closed to cover the upper surface of the housing.

4. The automated analyzer according to claim 1, wherein the panel holding base is formed with increasingly lower height radially from the upper end side toward the lower end side.

5. The automated analyzer according to claim 1, wherein the operating panel is held on a substantially trapezoidal surface of the panel holding base.

6. The automated analyzer according to claim 2, wherein the protective cover includes a transparent region formed in a part thereof from a transparent material, and the recessed portion is formed from an opaque material.
